# EUROPÄISCHE PATENTANMELDUNG

(11) **EP 4 290 744 A1**
(43) Veröffentlichungstag der Anmeldung: **13.12.2023**
(21) Anmeldenummer: 22177859.0
(22) Anmeldetag: 08.06.2022
(51) Int. Cl.: H02K 5/22, H02K 15/00

(54) **VERFAHREN ZUR HERSTELLUNG EINER STATORVORRICHTUNG FÜR EINE ELEKTRISCHE MASCHINE, STATORVORRICHTUNG FÜR EINE ELEKTRISCHE MASCHINE UND ELEKTRISCHE MASCHINE ZUM ANTREIBEN EINES FAHRZEUGS**

(71) Anmelder: Valeo eAutomotive Germany GmbH, 91056 Erlangen (DE)
(72) Erfinder: Förster, David, 97616 C/o VSeA, Siemensstr. 15, Bad Neustadt a.d.Saale (DE); Hubert, Markus, 97616 C/o VSeA, Siemensstr. 15, Bad Neustadt a.d.Saale (DE)
(74) Vertreter: Valeo Powertrain Systems

(57) **Zusammenfassung**

Verfahren zur Herstellung einer Statorvorrichtung (1) für eine elektrische Maschine (101), aufweisend folgende Schritte:
- Bereitstellen eines Stators (2), aufweisend einen Statorkern (3), der eine Statorlängsachse (4) und eine bezüglich der Statorlängsachse (4) axiale Statorstirnseite (5) aufweist, und eine Vielzahl von Formleitern (7a-c), welche eine Statorwicklung ausbilden und den Statorkern (3) abschnittsweise axial bezüglich der Statorlängsachse (4) durchsetzen, wobei die Formleiter (7a-c) wenigstens einen Anschlussformleiter (7a) umfassen, der einen sich an der Statorstirnseite (5) aus dem Statorkern (3) heraus erstreckenden und ein freies Ende (11) des Anschlussformleiters (7a) aufweisenden Endabschnitt (10) aufweist;
- Bereitstellen einer Gehäusevorrichtung (12), aufweisend einen Gehäusekörper (13) mit einem Aufnahmeraum (15) für den Stator (2) und einen Biegeabschnitt (16);
- Anordnen des Stators (2) innerhalb des Aufnahmeraums (15) derart, dass der Endabschnitt (10) in einer aufgenommenen Stellung des Stators (2) aus dem Aufnahmeraum (15) herausragt; und
- Biegen des Endabschnitts (10) unter Abstützung auf dem Biegeabschnitt (16), um den Endabschnitt (10) plastisch zu verformen.

## Beschreibung

Die vorliegende Erfindung betrifft ein Verfahren zur Herstellung einer Statorvorrichtung für eine elektrische Maschine. Daneben betrifft die Erfindung eine Statorvorrichtung für eine elektrische Maschine und eine elektrische Maschine zum Antreiben eines Fahrzeugs.

Statorvorrichtungen, deren Stator eine aus Formleitern gebildete Statorwicklung aufweist, werden regelmäßig in einer Gehäusevorrichtung aufgenommen, die einen Aufnahmeraum für den Stator umgibt. Um die Statorwicklung mit einer Spannungsquelle zu versorgen, ist wenigstens einer der Formleiter als Anschlussformleiter vorgesehen. Vor dem Aufnehmen des Stators in den Aufnahmeraum, kann sich der wenigstens eine Anschlussformleiter in beliebiger Richtung vom Stator erstrecken. Um den wenigstens einen Anschlussformleiter an eine vorgegebene Anschlussposition zu führen, muss er vor oder nach dem Anordnen des Stators im Aufnahmeraum der Gehäusevorrichtung gebogen werden.

Dieser Biegevorgang ist herkömmlicherweise kompliziert, weil ein Biegewerkzeug ein Abstützungsmittel erfordert, um welches der Endschnitt gebogen wird. Ein solcher Biegevorgang kann, insbesondere bei einer automatisierten Durchführung, auch zu erheblichen Fertigungstoleranzen führen, die ein Anschließen des Anschlussformleiters erschweren können.

Der Erfindung liegt die Aufgabe zugrunde, eine vereinfachte Möglichkeit zum Anschließen einer Statorwicklung, die aus wenigstens einen Anschlussformleiter umfassenden Formleitern gebildet ist, anzugeben.

Zur Lösung dieser Aufgabe wird erfindungsgemäß ein Verfahren zur Herstellung einer Statorvorrichtung für eine elektrische Maschine vorgeschlagen, aufweisend folgende Schritte: Bereitstellen eines Stators, aufweisend einen Statorkern, der eine Statorlängsachse und eine bezüglich der Statorlängsachse axiale Statorstirnseite aufweist, und ein Vielzahl von Formleitern, welche eine Statorwicklung ausbilden und den Statorkern abschnittsweise axial bezüglich der Statorlängsachse durchsetzen, wobei die Formleiter wenigstens einen Anschlussformleiter umfassen, der einen sich an der Statorstirnseite aus dem Statorkern heraus erstreckenden und ein freies Ende des Anschlussformleiters aufweisenden Endabschnitt aufweist; Bereitstellen einer Gehäusevorrichtung, aufweisend einen Gehäusekörper mit einem Aufnahmeraum für den Stator und einen Biegeabschnitt; Anordnen des Stators innerhalb des Aufnahmeraums derart, dass der Endabschnitt in einer aufgenommenen Stellung des Stators aus dem Aufnahmeraum herausragt; und Biegen des Endabschnitts unter Abstützung auf dem Biegeabschnitt, um den Endabschnitt plastisch zu verformen.

Das erfindungsgemäße Verfahren zur Herstellung einer Statorvorrichtung für eine elektrische Maschine weist einen Schritt des Bereitstellens eines Stators auf. Der Stator weist einen Statorkern auf. Der Statorkern weist eine Statorlängsachse auf. Der Statorkern weist ferner eine bezüglich der Statorlängsachse axiale Statorstirnseite auf. Der Stator weist ferner eine Vielzahl von Formleitern auf. Die Formleiter bilden eine Statorwicklung aus. Die Formleiter durchsetzen den Statorkern abschnittsweise axial bezüglich der Statorlängsachse. Die Formleiter umfassen wenigstens einen Anschlussformleiter. Der wenigstens eine Anschlussformleiter weist einen Endabschnitt auf. Der Endabschnitt erstreckt sich an der Statorstirnseite aus dem Statorkern heraus. Der Endabschnitt weist ferner ein freies Ende des Anschlussformleiters auf. Das erfindungsgemäße Verfahren weist ferner einen Schritt des Bereitstellens einer Gehäusevorrichtung auf. Die Gehäusevorrichtung weist einen Gehäusekörper auf. Der Gehäusekörper weist einen Aufnahmeraum für den Stator auf. Der Gehäusekörper weist ferner einen Biegeabschnitt auf. Das erfindungsgemäße Verfahren weist ferner einen Schritt des Anordnens des Stators innerhalb des Aufnahmeraums auf. Das Anordnen erfolgt derart, dass der Endabschnitt in einer aufgenommenen Stellung des Stators aus dem Aufnahmeraum herausragt. Das erfindungsgemäße Verfahren weist ferner einen Schritt des Biegens des Endabschnitts auf. Das Biegen erfolgt unter Abstützung auf dem Biegeabschnitt, um den Endabschnitt plastisch zu verformen.

Die Erfindung beruht auf der Überlegung, während der Herstellung der Statorvorrichtung den Biegeabschnitt des Gehäusekörpers zur Abstützung des Endabschnitts zu nutzen. In der aufgenommenen Stellung des Stators kann der Endabschnitt folglich um den Biegeabschnitt gebogen werden, um eine vorgegebene Biegung des Endabschnitts so auszubilden, dass das freie Ende des Anschlussformleiters nach dem Biegen an einer gewünschten Position liegt. Durch die Nutzung des Biegeabschnitts wird die Herstellung der Statorvorrichtung vorteilhafterweise vereinfacht, weil auf eine zusätzliche Abstützungsvorrichtung an einem Biegewerkzeug verzichtet werden kann. Dadurch, dass der Biegeabschnitt am Gehäusekörper ausgebildet ist, befindet sich der Biegeabschnitt zudem in einer definierten Position, sodass Fertigungstoleranzen bezüglich des Gehäusekörpers während der Fertigung verringert werden können.

Der Statorkern ist vorzugsweise aus einer Vielzahl von bezüglich der Statorlängsachse axial geschichteten und/oder gegeneinander isolierten Einzelblechen ausgebildet. Der Statorkern kann insoweit auch als Statorblechpaket aufgefasst werden.

Die Formleiter sind vorzugsweise aus einem elektrisch leitfähigen Material, insbesondere Kupfer, gebildet und weisen zumisst abschnittsweise eine Isolierung auf. Die Isolierung erstreckt sich insbesondere über jenen Teil des Endabschnitts, der auf dem Biegeabschnitt abgestützt wird. Die Formleiter weisen bevorzugt einen rechteckigen oder abgerundet rechteckigen Querschnitt auf. Sie sind insbesondere nicht biegeschlaff. Die Formleiter sind vorzugsweise an einer der Statorstirnseite gegenüberliegenden weiteren Statorstirnseite, insbesondere stoffschlüssig, elektrisch leitfähig und mechanisch miteinander verbunden. Der wenigstens eine Anschlussformleiter bildet insbesondere ein Ende eines durch die Formleiter ausgebildeten Strompfad des aus. Bevorzugt umfassen die Formleiter mehrere Anschlussformleiter, insbesondere für jede Phase der Statorwicklung einen Anschlussformleiter. Sind weitere Anschlussformleiter vorgesehen, werden auch diese im Schritt des Biegens um den Biegeabschnitt gebogen.

Das Anordnen des Stators innerhalb des Aufnahmeraums umfasst insbesondere auch ein Befestigen des Stators im Aufnahmeraum. Die Befestigung des Stators im Aufnahmeraum kann insbesondere unter Ausbildung eines Presssitzes erfolgen. Die Befestigung des Stators im Aufnahmeraum kann insbesondere unter Ausbildung eines Schraubsitzes erfolgen.

Bevorzugt ist vorgesehen, dass der Gehäusekörper eine sich durch den Aufnahmeraum erstreckende Gehäuselängsachse aufweist. Der Gehäusekörper kann ferner eine bezüglich der Gehäuselängsachse axiale erste Gehäusestirnseite und eine der ersten Gehäusestirnseite gegenüberliegende axiale zweite Gehäusestirnseite aufweisen. Bevorzugt befindet sich der Biegeabschnitt an der ersten Gehäusestirnseite. Der Schritt des Anordnens des Stators innerhalb des Aufnahmeraums kann derart erfolgen, dass sich die Statorstirnseite in der aufgenommenen Stellung näher an der ersten Gehäusestirnseite befindet als an der zweiten Gehäusestirnseite. Mit anderen Worten befinden sich in der aufgenommenen Stellung die Statorstirnseite und die erste Gehäusestirnseite bezüglich der Gehäuselängsachse und der Statorlängsachse auf derselben Seite.

Bevorzugt weist der Biegeabschnitt an seiner der ersten Gehäusestirnseite abgewandten Seite eine konvexe Randkontur auf. Durch die konvexe Randkontur kann das Biegeverhalten des Endabschnitts bzw. die gewünschte Form des gebogenen Endabschnitts vorgegeben werden.

Der Biegeabschnitt ist dabei bevorzugt als Körper mit einer Mantelfläche, die zumindest abschnittsweise entlang der Randkontur verläuft ausgebildet. Der Endabschnitt kann während des Schritts des Biegens auf der Mantelfläche aufliegen.

Der Körper kann zwei Grundflächen aufweisen. Er ist insbesondere zylinderförmiges ausgebildet. Der die zwei Grundflächen aufweisende Körper kann sich aber auch um die Gehäuselängsachse erstrecken. Es ist alternativ auch möglich, dass sich der Körper geschlossen um die Gehäuselängsachse erstreckt. Der Körper kann dann als radial umlaufende Wulst des Gehäusekörpers aufgefasst werden.

Gemäß einer bevorzugten Ausgestaltung des erfindungsgemäßen Verfahrens ist der Biegeabschnitt zumindest abschnittsweise einstückig mit dem Gehäusekörper ausgebildet. Der Gehäusekörper und der Biegeabschnitt können insoweit beispielsweise als Gussteil ausgebildet sein.

Gemäß einer alternativen bevorzugten Ausgestaltung ist der Biegeabschnitt durch ein Befestigungsmittel oder formschlüssig am Gehäusekörper, insbesondere lösbar, befestigt. In diesem Fall kann das Verfahren ferner nach dem Schritt des Biegens einen Schritt des Entfernens des Biegeabschnitts vom Gehäusekörper umfassen. Das heißt, dass nach Abschluss des Verfahrens der Biegeabschnitt nicht mehr am Gehäusekörper bzw. an der Statorvorrichtung vorhanden ist. Der Biegeabschnitt kann zur Erleichterung des Biegens bzw. zur Vermeidung einer Beschädigung des Endabschnitts aus einem vom Gehäusekörper abweichenden Material, beispielsweise aus Kunststoff oder aus Keramik, gebildet sein.

Es kann bei dem erfindungsgemäßen Verfahren ferner vorgesehen sein, dass der Endabschnitt während des Schritts des Biegens auf einer Oberfläche des Biegeabschnitts aufliegt und die Oberfläche durch eine spanende Bearbeitung ausgebildet ist. So lässt sich die Oberflächenrauheit des Biegeabschnitts verringern, um eine Beschädigung des Endabschnitts bzw. seiner Isolierung während des Biegen zu vermeiden. Alternativ oder zusätzlich kann die Oberfläche durch eine aus einem ersten Werkstoff gebildete Oberflächenbeschichtung auf einer aus einem zweiten Werkstoff gebildeten Basis des Biegeabschnitts ausgebildet sein. Dabei weist der erste Werkstoff bevorzugt einen gegenüber dem zweiten Werkstoff reduzierte Haftreibung auf.

In einer bevorzugten Ausgestaltung kann der zweite Werkstoff eine zusätzliche Isolationsschicht zwischen dem Anschlussformleiter und dem Gehäuse ausbilden.

In bevorzugter Ausgestaltung weist die Gehäusevorrichtung einen Anschlussabschnitt zum elektrischen Kontaktieren der Statorwicklung auf, wobei der Endabschnitt während des Schritts des Biegens in den Anschlussabschnitt eingeführt wird. Dabei kann die Gehäusevorrichtung einen Gehäuseteil, der an den Gehäusekörper angeformt oder am Gehäusekörper befestigt ist und durch ein Verschlusselement verschließbar ist, aufweisen.

In einer weiteren Ausgestaltung kann das Gehäuseteil auch in der Peripherie der Gehäusevorrichtung angeordnet sein.

Der Endabschnitt kann in den Gehäuseteil eingeführt werden.

Der Anschlussabschnitt kann, insbesondere innerhalb des Gehäuseteils angeordnete, Phasenanschlüsse aufweisen. Das Verfahren kann dann ferner folgenden Schritt aufweisen: Kontaktieren des wenigstens einen in den Anschlussabschnitt eingeführten Endabschnitts mit einem der Phasenanschlüsse.

Es kann ferner vorgesehen sein, dass der Endabschnitt ein sein freies Ende umfassendes erstes Befestigungsmittel, das durch ösenartiges Umbiegen ausgebildet ist, aufweist und im Schritt des Kontaktierens ein zweites Befestigungsmittel durch das erste Befestigungsmittel durchgeführt und am Phasenanschluss befestigt wird.

Die der Erfindung zugrunde liegende Aufgabe wird ferner gelöst durch eine Statorvorrichtung für eine elektrische Maschine, aufweisend: einen Stator, aufweisend einen Statorkern, der eine Statorlängsachse und eine bezüglich der Statorlängsachse axiale Statorstirnseite aufweist, und ein Vielzahl von Formleitern, welche eine Statorwicklung ausbilden und den Statorkern abschnittsweise axial bezüglich der Statorlängsachse durchsetzen, wobei die Formleiter wenigstens einen Anschlussformleiter umfassen, der einen sich an der Statorstirnseite aus dem Statorkern heraus erstreckenden und ein freies Ende des Anschlussformleiters aufweisenden Endabschnitt aufweist; und eine Gehäusevorrichtung, aufweisend einen Gehäusekörper, der einen Aufnahmeraum für den Stator umgibt, und einen Biegeabschnitt; wobei der Stator innerhalb des Aufnahmeraums angeordnet ist und der Endabschnitt um den Biegeabschnitt herum gebogen verläuft.

Bei der erfindungsgemäßen Statorvorrichtung kann vorgesehen sein, dass der Gehäusekörper eine sich durch den Aufnahmeraum erstreckende Gehäuselängsachse, eine bezüglich der Gehäuselängsachse axiale erste Gehäusestirnseite und eine der ersten Gehäusestirnseite gegenüberliegende axiale zweite Gehäusestirnseite aufweist und sich der Biegeabschnitt an der ersten Gehäusestirnseite befindet. Der Biegeabschnitt kann an seiner der ersten Gehäusestirnseite abgewandten Seite eine konvexe Randkontur aufweisen. Der Biegeabschnitt kann als Körper mit einer Mantelfläche, die zumindest abschnittsweise entlang der Randkontur verläuft, ausgebildet sein. Der Endabschnitt kann sich entlang der Mantelfläche erstrecken.

In einer weiteren Ausgestaltung kann der Endabschnitt eine weitere Biegung nach der konvexen Randkontur aufweisen, wodurch das freie Ende sich in Radialrichtung vom Gehäusekörper wegweisend erstreckt.

Bei der erfindungsgemäßen Statorvorrichtung kann eine Oberfläche des Biegeabschnitts durch eine spanende Bearbeitung ausgebildet sein. Alternativ oder zusätzlich kann die Oberfläche durch eine aus einem ersten Werkstoff gebildete Oberflächenbeschichtung auf einer aus einem zweiten Werkstoff gebildeten Basis des Biegeabschnitts ausgebildet sein. Der erste Werkstoff weist bevorzugt eine gegenüber dem zweiten Werkstoff reduzierte Haftreibung auf.

Der Endabschnitt kann auch ein sein freies Ende umfassendes erstes Befestigungsmittel, das durch ösenartiges Umbiegen ausgebildet ist, aufweisen.

Bevorzugt ist ferner vorgesehen, dass der Endabschnitt einen Querschnitt mit einer vorgegebenen Weite und einer vorgegebenen Dicke aufweist. Der Endabschnitt kann um seine Weite gebogen um den Biegeabschnitt herum verlaufen. Bevorzugt beträgt ein Biegeradius dann wenigstens das 1,5-fache, besonders bevorzugt wenigstens das 2,5-fache der Weite. Besonders bevorzugt beträgt der Biegeradius bei einer Weite bis zu 10 mm wenigstens das 1,5-fache der Weite und/oder bei einer Weite von mehr als 10 mm das 2,5-fache der Weite. Der Endabschnitt kann ferner um seine Dicke gebogen um den Biegeabschnitt herum verlaufen. Dabei beträgt der Biegeradius bevorzugt wenigstens das Doppelte der Dicke.

Die der Erfindung zugrundeliegende Aufgabe wird ferner gelöst durch eine elektrische Maschine zum Antreiben eines Fahrzeugs, umfassend einen Rotor und eine erfindungsgemäße Statorvorrichtung oder eine durch das erfindungsgemäßen Verfahren erhaltener Statorvorrichtung, wobei der Rotor drehbar bezüglich des Stators gelagert ist.

Die elektrische Maschine ist vorzugsweise eine, insbesondere permanent oder elektrisch erregte, Synchronmaschine. Alternativ ist die elektrische Maschine eine Asynchronmaschine.

Sämtliche Ausführungen zum erfindungsgemäßen Verfahren und zur erfindungsgemäßen Statorvorrichtung lassen sich aufeinander übertragen, sodass die zuvor beschriebenen Vorteile auch durch den jeweils anderen Gegenstand erzielt werden können.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:
- Fig. 1: eine Prinzipskizze eines ersten Ausführungsbeispiels der erfindungsgemäßen Statorvorrichtung;
- Fig. 2: eine geschnittene Detaildarstellung der Statorvorrichtung gemäß dem ersten Ausführungsbeispiel;
- Fig. 3: eine Detailansicht des Anschlussformleiters im Bereich seines freien Endes gemäß dem ersten Ausführungsbeispiel;
- Fig. 4: eine stirnseitige Prinzipskizze des Biegeabschnitts gemäß dem ersten Ausführungsbeispiel;
- Fig. 5: ein Flussdiagramm eines ersten Ausführungsbeispiels des Verfahrens;
- Fig. 6: eine Prinzipskizze eines Biegeabschnitts gemäß einem weiteren Ausführungsbeispiel der erfindungsgemäßen Statorvorrichtung und des erfindungsgemäßen Verfahrens; und
- Fig. 7: eine Prinzipskizze eines Fahrzeugs mit einem Ausführungsbeispiel der erfindungsgemäßen elektrischen Maschine.

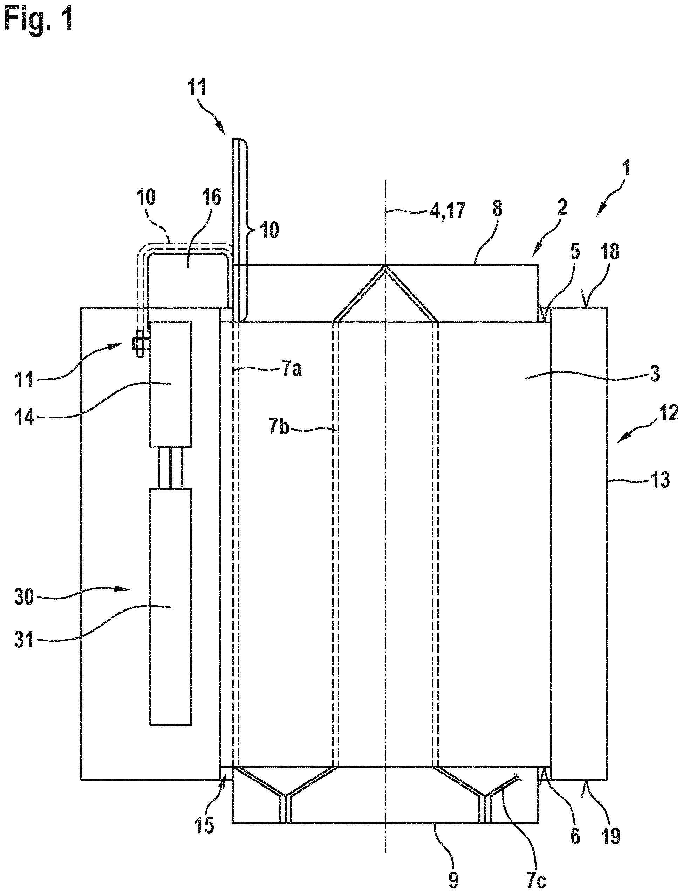

- Fig. 1: ist eine Prinzipskizze eines ersten Ausführungsbeispiels einer Statorvorrichtung 1.

Die Statorvorrichtung 1 weist einen Stator 2 mit einem Statorkern 3 auf. Der Statorkern 3 weist eine Statorlängsachse 4 und eine bezüglich der Statorlängsachse 4 axiale Statorstirnseite 5, der eine weitere Statorstirnseite 6 gegenüberliegt, auf. Der Statorkern 3 ist beispielsweise aus einer Vielzahl axial geschichteter und gegeneinander isolierter Einzelbleche ausgebildet und kann daher auch als Statorblechpaket bezeichnet werden.

Der Stator 2 weist ferner eine Vielzahl von Formleitern 7a, 7b, 7c auf, die eine Statorwicklung des Stators ausbilden und den Statorkern 3 abschnittsweise axial bezüglich der Längsachse 4 durchsetzen. Dazu sind entsprechende Nuten (nicht gezeigt) im Statorkern 3 ausgebildet. Die Formleiter 7a-c bilden an den Stirnseiten 5, 6 jeweils einen Wicklungskopf 8, 9 aus. An der weiteren Stirnseite 6 sind die Formleiter 7a-c elektrisch leitfähig und mechanisch miteinander verbunden, sodass sie einen Strompfad der Statorwicklung ausbilden.

Einer der Formleiter 7a-c ist als Anschlussformleiter 7a ausgebildet, der einen sich an der Statorstirnseite 5 aus dem Statorkern 3 heraus erstreckenden Endabschnitt 10 aufweist. Der Endabschnitt umfasst den an der Statorstirnseite 5 aus dem Statorkern 3 herausgeführten Teil des Anschlussformleiters 7a bis zu seinem freien Ende 11.

Fig. 1 zeigt den Stator 2 in einer in einer Gehäusevorrichtung 12 der Statorvorrichtung 1 aufgenommenen Stellung. Die Gehäusevorrichtung 12 weist einen Gehäusekörper 13 und einen Anschlussabschnitt 14 auf. Der Gehäusekörper 13 bildet einen Aufnahmeraum 15 für den Stator 2 aus und weist ferner an der Stirnseite 5 einen Biegeabschnitt 16 auf.

Der Gehäusekörper 13 weist ferner eine sich durch den Aufnahmeraum erstreckende Gehäuselängsachse 17, die in der aufgenommenen Stellung auf der Statorlängsachse 4 liegt, eine bezüglich der Gehäuselängsachse 17 axiale erste Gehäusestirnseite 18 sowie eine der ersten Gehäusestirnseite 18 gegenüberliegende zweite Gehäusestirnseite 19 auf. Der Biegeabschnitt 16 befindet sich, wie in Fig. 1 zu sehen ist, an der ersten Gehäusestirnseite 18, die der Statorstirnseite 5 zugewandt ist.

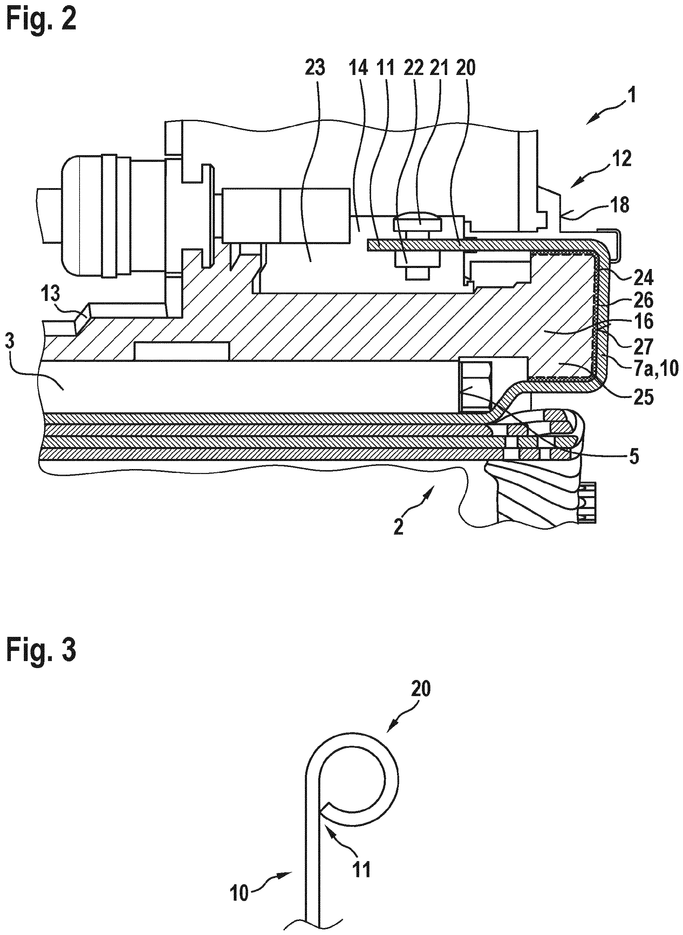

Fig. 2 ist eine geschnittene Detaildarstellung der Statorvorrichtung 1 gemäß dem ersten Ausführungsbeispiel.

Der Endabschnitt 10 des Formleiters 7a verläuft um den Biegeabschnitt 16 herum gebogen, sodass er zu dem Anschlussabschnitt 14 der Gehäusevorrichtung 12 geführt ist. Der Endabschnitt 10 weist ein sein freies Ende 11 umfassendes erstes Befestigungsmittel 20 auf, das mittels eines zweiten Befestigungsmittels 21 an einem Phasenanschluss 22 des Anschlussabschnitts 14 befestigt ist. Dazu zeigt Fig. 3 im Detail, dass das erste Befestigungsmittel 20 durch ösenartiges Umbiegen des Anschlussformleiters 7a, also einstückig und materialeinheitlich mit diesem, ausgebildet ist. Zum Herstellen einer elektrischen Verbindung mit dem Anschlussabschnitt 14 ist der Anschlussformleiter 7a im Bereich des Befestigungsmittels 20 abisoliert. Das zweite Befestigungsmittel 21, beispielsweise eine Schraube oder einen Bolzen, kann so in die Umbiegung eingeführt werden.

In Fig 2 ist ferner zu sehen, dass Gehäusevorrichtung 12 einen Gehäuseteil 23, der an den Gehäusekörper 13 angeformt oder an diesen befestigt ist aufweist und der Endabschnitt in den Gehäuseteil 23 eingeführt ist. Der Gehäuseteil 23 kann durch ein Verschlusselement (nicht gezeigt) verschließbar sein.

Im vorliegenden Ausführungsbeispiel ist der Biegeabschnitt 16 einstückig mit dem Gehäusekörper 13, beispielsweise als Gussteil, ausgebildet. Um die Haftreibung des Biegeabschnitts herabzusetzen kann die Oberfläche des Biegeabschnitts 16 durch spanende Bearbeitung möglichst glatt ausgebildet sein. Alternativ oder zusätzlich ist die Oberfläche des Biegeabschnitts 16 durch eine aus einem ersten Werkstoff gebildete Oberflächenbeschichtung 24 auf einer aus einem zweiten Werkstoff gebildeten Basis 25 des Biegeabschnitts 16 ausgebildet, wobei der erste Werkstoff eine gegenüber dem zweiten Werkstoff reduzierte Haftreibung aufweist. Der erste Werkstoff ist beispielsweise eine Keramik oder ein Kunststoff.

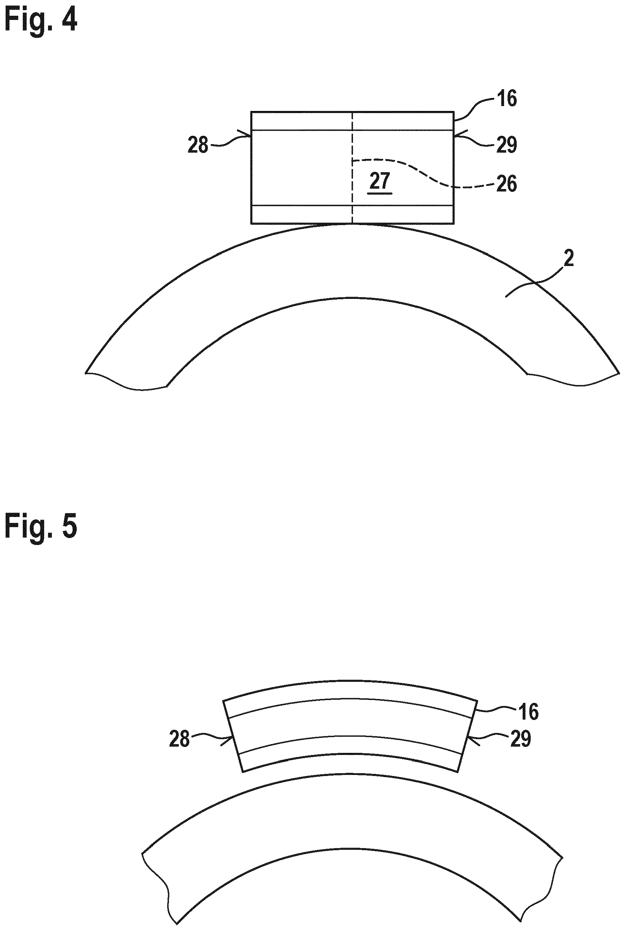

Fig. 4 ist eine stirnseitige Prinzipskizze des Biegeabschnitts 16 gemäß dem ersten Ausführungsbeispiel.

Wie bei einer Zusammenschau von Fig. 2 und Fig. 4 zu erkennen ist, weist der Biegeabschnitt 16 an seiner der ersten Gehäusestirnseite 18 abgewandten Seite eine konvexe Randkontur 26 auf und ist als Körper mit einer Mantelfläche 27, die zumindest abschnittsweise entlang der Randkontur 26 verläuft, ausgebildet. Der Körper weist zwei Grundflächen 28, 29 auf und ist zylinderförmig.

Wieder mit Bezug zu Fig. 1 bildet der Gehäusekörper 13 einen weiteren Aufnahmeraum 30 aus, in dem ein Stromrichter 31 angeordnet ist. Der Stromrichter 31 ist als Wechselrichter ausgebildet und über den Anschlussabschnitt 14 und den Anschlussformleiter 7a mit der Statorwicklung zu deren elektrischer Versorgung verbunden.

Selbstverständlich kann der Stator 2 weitere Phasen, diesen zugeordnete weitere Phasenanschlüsse und weitere Anschlussformleiter, die jeweils einer Phase zugeordnet sind, aufweisen. Die weiteren Anschlussformleiter sind dann entsprechend dem Anschlussformleiter 7a ebenfalls gebogen um den Biegeabschnitt 16 geführt.

Fig. 4 ist ein Flussdiagramm eines ersten Ausführungsbeispiels eines Verfahrens zur Herstellung einer Statorvorrichtung 1 gemäß dem ersten Ausführungsbeispiel.

Das Verfahren weist einen Schritt S1 des Bereitstellens des Stators 2 auf. Zum Zeitpunkt der Durchführung des Schritts S1 befindet sich der Endabschnitt 10 in der in Fig. 1 mit durchgezogener Linie dargestellten Stellung. Der Endabschnitt 10 ragt also im Wesentlichen gerade axial aus dem Statorkern 3 heraus. Im Gegensatz zur Darstellung in Fig. 1 befindet sich der Stator 2 während des Schritts S1 noch nicht in der aufgenommenen Stellung.

Das Verfahren umfasst ferner einen sich anschließenden Schritt S2 des Bereitstellens der Gehäusevorrichtung 12. In einem anschließenden Schritt S3 wird der Stator 2 innerhalb des Aufnahmeraums 15 derart angeordnet, dass der Endabschnitt - wie in Fig. 1 gezeigt - in der aufgenommenen Stellung des Stators 2 aus dem Aufnahmeraum 15 herausragt. Im Schritt S3 wird der Stator 2 auch mittels eines Presssitzes im Aufnahmeraum 15 befestigt.

In einem anschließenden Schritt S4 erfolgt ein Biegen des Endabschnitts 10 unter Abstützung auf dem Biegeabschnitt 16, um den Endabschnitt 10 plastisch zu verformen. Dabei liegt der Endabschnitt 10 auf der Mantelfläche 27 auf. Durch die zuvor beschriebene Ausgestaltung der Oberfläche des Biegeabschnitts 16 wird dabei eine Beschädigung der Isolation des Endabschnitts 10 vermieden. Während des Biegens wird der Endabschnitt ferner in den Anschlussabschnitt 14 eingeführt.

In einem anschließenden Schritt S5 wird der in den Anschlussabschnitt 14 eingeführte Endabschnitt 10 mit dem bzw. einem der Phasenanschlüsse 22 kontaktiert, indem das zweite Befestigungsmittel 21 in die ösenartige Umbiegung bzw. das erste Befestigungsmittel 20 eingeführt wird.

Gemäß einem weiteren Ausführungsbeispiel des Herstellungsverfahrens ist der Biegeabschnitt 16 nicht einstückig mit dem Gehäusekörper 13 ausgebildet, sondern lösbar an diesem befestigt. Die Befestigung kann mittels eines zusätzlichen Befestigungsmittels oder formschlüssig ausgebildet sein. Der Biegeabschnitt 16 kann hier vollständig aus dem zuvor beschriebenen ersten Werkstoff gebildet sein. In diesem Fall kann das Verfahren ferner einen sich an den Schritt S4 oder S5 anschließenden Schritt S6 des Entfernens des Biegeabschnitts 16 umfassen, so dass dieser nach Abschluss des Verfahrens nicht an der Statorvorrichtung 1 verbleibt.

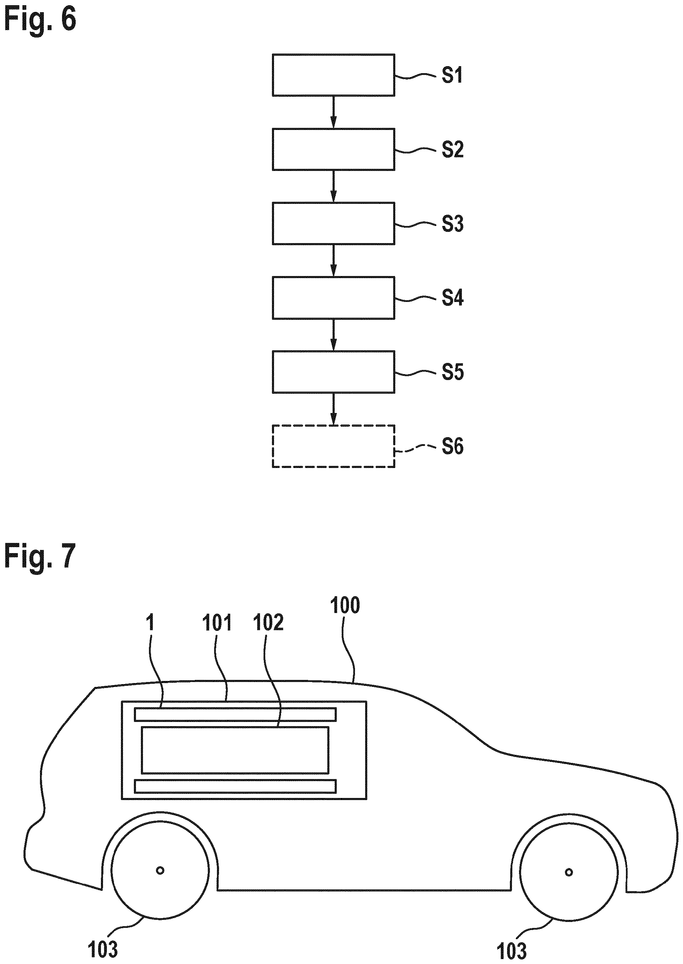

Fig. 6 ist eine Prinzipskizze eines Biegeabschnitts 16 gemäß einem weiteren Ausführungsbeispiel der Statorvorrichtung 1 und des Verfahrens. Bei diesem Ausführungsbeispiel erstreckt sich der Körper des Biegeabschnitts 16 um die Gehäuselängsachse 17 (vgl. Fig. 1). Der Biegeabschnitt 16 hat stirnseitig gesehen im Wesentlichen die Form eines Ringsektors.

Gemäß einem weiteren Ausführungsbeispiel erstreckt sich der Biegeabschnitt geschlossen um die Gehäuselängsachse 17.

Fig. 7 ist eine Prinzipskizze eines Ausführungsbeispiels eines Fahrzeugs 100 mit einem Ausführungsbeispiel einer elektrischen Maschine 101.

Die elektrische Maschine 101, beispielsweise ein permanent oder elektrisch erregter Synchronmotor oder ein Asynchronmotor, weist eine Statorvorrichtung 1 gemäß einem der zuvor beschriebenen Ausführungsbeispiele bzw. eine durch ein Herstellungsverfahren gemäß einem der zuvor beschriebenen Ausführungsbeispiele erhaltende Statorvorrichtung 1 sowie einen Rotor 102 auf. Der Rotor 102 ist drehbar bezüglich des Stators 1 gelagert.

Das Fahrzeug 100 weist ferner Räder 103 auf. Die elektrische Maschine 101 ist dazu eingerichtet ist, wenigstens eines der Räder 103 indirekt, beispielsweise über ein Getriebe (nicht gezeigt) anzutreiben oder direkt, beispielsweise in Gestalt eines Radnabenmotors, anzutreiben. Das Fahrzeug 100 kann ferner eine mit dem Rad 103 gekoppelte Achse (nicht gezeigt) aufweisen, die die elektrische Maschine 101 des Fahrzeugs 100 direkt oder indirekt antreibt.

Das erfindungsgemäße Fahrzeug 100 ist ein batterieelektrisches Fahrzeug (BEV), ein mittels einer Brennstoffzelle betriebenes Fahrzeug oder ein Hybridfahrzeug. Im letzteren Fall weist das Fahrzeug 100 ferner einen Verbrennungsmotor (nicht gezeigt) auf.

## Patentansprüche

1. Verfahren zur Herstellung einer Statorvorrichtung (1) für eine elektrische Maschine (101), aufweisend folgende Schritte:
- Bereitstellen eines Stators (2), aufweisend einen Statorkern (3), der eine Statorlängsachse (4) und eine bezüglich der Statorlängsachse (4) axiale Statorstirnseite (5) aufweist, und eine Vielzahl von Formleitern (7a-c), welche eine Statorwicklung ausbilden und den Statorkern (3) abschnittsweise axial bezüglich der Statorlängsachse (4) durchsetzen, wobei die Formleiter (7a-c) wenigstens einen Anschlussformleiter (7a) umfassen, der einen sich an der Statorstirnseite (5) aus dem Statorkern (3) heraus erstreckenden und ein freies Ende (11) des Anschlussformleiters (7a) aufweisenden Endabschnitt (10) aufweist;
- Bereitstellen einer Gehäusevorrichtung (12), aufweisend einen Gehäusekörper (13) mit einem Aufnahmeraum (15) für den Stator (2) und einen Biegeabschnitt (16);
- Anordnen des Stators (2) innerhalb des Aufnahmeraums (15) derart, dass der Endabschnitt (10) in einer aufgenommenen Stellung des Stators (2) aus dem Aufnahmeraum (15) herausragt; und
- Biegen des Endabschnitts (10) unter Abstützung auf dem Biegeabschnitt (16), um den Endabschnitt (10) plastisch zu verformen.

2. Verfahren nach Anspruch 1, wobei
der Gehäusekörper (13) eine sich durch den Aufnahmeraum (15) erstreckende Gehäuselängsachse (17), eine bezüglich der Gehäuselängsachse (17) axiale erste Gehäusestirnseite (18) und eine der ersten Gehäusestirnseite (18) gegenüberliegende axiale zweite Gehäusestirnseite (19) aufweist und sich der Biegeabschnitt (16) an der ersten Gehäusestirnseite (18) befindet, wobei der Schritt des Anordnens des Stators (2) innerhalb des Aufnahmeraums (15) derart erfolgt, dass sich die Statorstirnseite (5) in der aufgenommenen Stellung näher an der ersten Gehäusestirnseite (18) befindet als an der zweiten Gehäusestirnseite (19).

3. Verfahren nach Anspruch 2, wobei
der Biegeabschnitt (16) an seiner der ersten Gehäusestirnseite (18) abgewandten Seite eine konvexe Randkontur (26) aufweist.

4. Verfahren nach Anspruch 3, wobei
der Biegeabschnitt (16) als Körper mit einer Mantelfläche (27), die zumindest abschnittsweise entlang der Randkontur (26) verläuft, ausgebildet ist und der Endabschnitt (10) während des Schritts des Biegens auf der Mantelfläche (27) aufliegt.

5. Verfahren nach Anspruch 4, wobei
- der Körper zwei Grundflächen (28, 29) aufweist und insbesondere zylinderförmig ist oder sich um die Gehäuselängsachse (17) erstreckt oder
- sich der Körper geschlossen um die Gehäuselängsachse (17) erstreckt.

6. Verfahren nach einem der vorhergehenden Ansprüche, wobei der Biegeabschnitt (16) zumindest abschnittsweise einstückig mit dem Gehäusekörper (13) ausgebildet ist.

7. Verfahren nach einem der Ansprüche 1 bis 5, wobei
der Biegeabschnitt (16) durch ein Befestigungsmittel oder formschlüssig am Gehäusekörper (13) befestigt ist.

8. Verfahren nach Anspruch 7, ferner umfassend folgenden nach dem Schritt des Biegens durchgeführten Schritt:
- Entfernen des Biegeabschnitts (16) vom Gehäusekörper (13).

9. Statorvorrichtung (1) für eine elektrische Maschine (101), aufweisend:
- einen Stator (2), aufweisend einen Statorkern (3), der eine Statorlängsachse (4) und eine bezüglich der Statorlängsachse (4) axiale Statorstirnseite (5) aufweist, und ein Vielzahl von Formleitern (7a-c), welche eine Statorwicklung ausbilden und den Statorkern (3) abschnittsweise axial bezüglich der Statorlängsachse (4) durchsetzen, wobei die Formleiter (7a-c) wenigstens einen Anschlussformleiter (7a) umfassen, der einen sich an der Statorstirnseite (5) aus dem Statorkern (3) heraus erstreckenden und ein freies Ende (11) des Anschlussformleiters (7a) aufweisenden Endabschnitt (10) aufweist; und
- eine Gehäusevorrichtung (12), aufweisend einen Gehäusekörper (13), der einen Aufnahmeraum (15) für den Stator (2) umgibt, und einen Biegeabschnitt (16);
wobei der Stator (2) innerhalb des Aufnahmeraums (15) angeordnet ist und der Endabschnitt (10) um den Biegeabschnitt (16) herum gebogen verläuft.

10. Statorvorrichtung nach Anspruch 9, wobei
der Gehäusekörper (13) eine sich durch den Aufnahmeraum (15) erstreckende Gehäuselängsachse (17), eine bezüglich der Gehäuselängsachse (17) axiale erste Gehäusestirnseite (18) und eine der ersten Gehäusestirnseite (18) gegenüberliegende axiale zweite Gehäusestirnseite (19) aufweist und sich der Biegeabschnitt (16) an der ersten Gehäusestirnseite (18) befindet.

11. Statorvorrichtung nach Anspruch 10, wobei
der Biegeabschnitt (16) an seiner der ersten Gehäusestirnseite (18) abgewandten Seite eine konvexe Randkontur (26) aufweist und der Biegeabschnitt (16) als Körper mit einer Mantelfläche (27), die zumindest abschnittsweise entlang der Randkontur (26) verläuft, ausgebildet ist und sich der Endabschnitt (10) entlang der Mantelfläche (27) erstreckt.

12. Statorvorrichtung nach Anspruch 9 oder 10, wobei
eine Oberfläche des Biegeabschnitts
- durch eine spanende Bearbeitung ausgebildet ist und/oder
- durch eine aus einem ersten Werkstoff gebildete Oberflächenbeschichtung (24) auf einer aus einem zweiten Werkstoff gebildeten Basis (25) des Biegeabschnitts (16) ausgebildet ist und der erste Werkstoff eine gegenüber dem zweiten Werkstoff reduzierte Haftreibung aufweist.

13. Statorvorrichtung nach einem der Ansprüche 9 bis 12, wobei
der Endabschnitt (10) ein sein freies Ende (11) umfassendes erstes Befestigungsmittel (20), das durch ösenartiges Umbiegen ausgebildet ist, aufweist.

14. Elektrische Maschine (101) zum Antreiben eines Fahrzeugs (100), umfassend einen Rotor (102) und Statorvorrichtung (1) nach einem der Ansprüche 9 bis 13 oder eine durch ein Verfahren nach einem der Ansprüche 1 bis 8 erhaltene Statorvorrichtung (1), wobei der Rotor (102) drehbar bezüglich des Stators (2) gelagert ist.
